# EUROPEAN PATENT APPLICATION

(11) **EP 4 175 031 A1**
(43) Date of publication of application: **03.05.2023**
(21) Application number: 22204861.3
(22) Date of filing: 01.11.2022
(51) Int. Cl.: H01M 50/152, H01M 50/159, H01M 50/188, H01M 50/317, H01M 50/367

(54) **CYLINDRICAL SECONDARY BATTERY AND METHOD FOR MANUFACTURING THE SAME**

(30) Priority: 02.11.2021 KR 20210148843
(71) Applicant: Samsung SDI Co., Ltd., Yongin-si, Gyeonggi-do 17084 (KR)
(72) Inventor: Sung Gwi, KO, 17084 Yongin-si (KR); Byoung Min, CHUN, 17084 Yongin-si (KR); Geun Ho, SEO, 17084 Yongin-si (KR); Gun Gue, PARK, 17084 Yongin-si (KR); Jin Young, MOON, 17084 Yongin-si (KR); Dae Kyu, KIM, 17084 Yongin-si (KR); Shin Jung, KIM, 17084 Yongin-si (KR)
(74) Representative: Marks & Clerk LLP

(57) **Abstract**

Provided is a cylindrical secondary battery. The cylindrical secondary battery includes a cylindrical can, an electrode assembly in which a first electrode plate, a second electrode plate, and a separator are wound and which is accommodated in the can, and a cap assembly which is insulated from the can and electrically connected to the electrode assembly and through which a degassing hole passes to communicate with the inside of the can. According to the embodiment, since a degassing function is applied to remove the gas generated before the product shipment, deformation of the can and the cap assembly may be reduced. In addition, swelling of the electrode assembly due to the generation of the internal gas may be prevented from occurring to reduce performance deterioration of the secondary battery.

## Description

### BACKGROUND

### 1. Field

Embodiments relate to a cylindrical secondary battery in which an internal gas is removable, and a method for manufacturing the same.

### 2. Description of the Related Art

A secondary battery includes a cell provided with an electrode assembly, which includes a positive electrode, a negative electrode, and a separator interposed between the positive electrode and the negative electrode, and an electrolyte impregnated in the electrode assembly.

The secondary battery may be provided in a variety of outer appearances such as cylindrical, prismatic, pouch type, and the like depending on the use. Among them, the cylindrical secondary battery has a structure in which an electrode assembly and an electrolyte are accommodated inside a cylindrical can, and one end of the can is sealed with a cap assembly. In general, a secondary battery may generate a gas inside the secondary battery due to repetitive charging and discharging and internal chemical factors. There is a limitation in that the cap assembly and the can are deformed due to the generation of the gas.

The above-described information disclosed in the technology that serves as the background of the present invention is only for improving understanding of the background of the present invention and thus may include information that does not constitute the related art.

### SUMMARY

An aspect of the present disclosure provides a cylindrical secondary battery, in which an internal gas is removable, and a method for manufacturing the same.

According to at least one of the embodiments, a cylindrical secondary battery includes: a cylindrical can; an electrode assembly in which a first electrode plate, a second electrode plate, and a separator are wound and which is accommodated in the can; and a cap assembly which is insulated from the can and electrically connected to the electrode assembly and through which a degassing hole passes to communicate with the inside of the can.

The cap assembly may include: a vent plate coupled to one side of the can and spaced apart from the degassing hole to provide a notch; a cap down plate which is disposed between the vent plate and the electrode assembly so as to be electrically connected to the electrode assembly and through which a plurality of slots pass; and a gasket disposed between the vent plate and the can to insulate the vent plate and the can from each other.

The vent plate may include: a first support that is in contact with the cap down plate; a vent part which is connected to the outside of the first support so as to be integrated with the first support and in which the notch is provided; and a second support connected to the outside of the vent part so as to be integrated with the vent part and coupled to the can with the gasket therebetween.

The second support may include: a first region disposed toward the vent part and having a thickness greater than that of the vent part; and a second region having a thickness relatively less than that of the first region.

The degassing hole may be defined in the first region.

The cap down plate may have a diameter less than that of the vent plate, and a top surface of an edge of the cap down plate may be in close contact with and welded to a portion of a bottom surface of an edge of the vent plate.

The cap assembly may further include a resin pin or rubber pin, which is press-fitted into the degassing hole to close the degassing hole after being assembled with the can.

The cap assembly may further include a sealing member that closes the degassing hole after removing the resin pin or rubber pin when a gas is generated inside the can.

The sealing member may include a press-fitting ball or resin or is coupled to the degassing hole in a male and female structure.

According to another embodiment, a method for manufacturing a cylindrical secondary battery includes: accommodating an electrode assembly in a can so as to be electrically connected to the can; electrically connecting a cap assembly to the electrode assembly; assembling the cap assembly with the can; inserting a resin pin or rubber pin into a hole passing through the cap assembly to close the hole; and coupling a sealing member to the hole passing through the cap assembly to close the hole after discharging a gas by removing the resin pin or rubber pin when the gas is generated.

At least some of the above and other features of the invention are set out in the claims.

### BRIEF DESCRIPTION OF THE DRAWINGS

FIG. 1 is a cross-sectional view illustrating a cylindrical secondary battery according an embodiment;
FIG. 2 is a plan view illustrating a cap assembly of FIG. 1;
FIG. 3 is a plan view illustrating a rear surface of the cap assembly of FIG. 1;
FIG. 4 is a cross-sectional view illustrating the cap assembly of FIG. 1;
FIG. 5 is a cross-sectional view illustrating a sealing member of the cap assembly of FIG. 4; and
FIG. 6 is a cross-sectional view illustrating a sealing member according to another embodiment.

### DETAILED DESCRIPTION

The present invention may, however, be embodied in many different forms and should not be construed as being limited to the embodiments set forth herein; rather, these embodiments are provided so that those skilled in the art thoroughly understand the present invention. Rather, these embodiments are provided so that this disclosure will be thorough and complete, and will fully convey the scope of the present invention to those skilled in the art.

In addition, in the following drawings, the thickness or size of each layer is exaggerated for convenience and clarity of description, and the same reference numerals in the drawings refer to the same elements. As used herein, the term "and/or" includes any and all combinations of one or more of the associated listed items. In this specification, it will also be understood that when a member A is referred to as being connected to a member B, the member A can be directly connected to the member B or indirectly connected to the member B with a member B therebetween.

The terms used herein are for illustrative purposes of the present invention only and should not be construed to limit the meaning or the scope of the present invention. As used in this specification, a singular form may, unless definitely indicating a particular case in terms of the context, include a plural form. Also, the expressions "comprise/include" and/or "comprising/including" used in this specification neither define the mentioned shapes, numbers, steps, operations, members, elements, and/or groups of these, nor exclude the presence or addition of one or more other different shapes, numbers, steps, operations, members, elements, and/or groups of these, or addition of these. The term "and/or" used herein includes any and all combinations of one or more of the associated listed items.

As used herein, terms such as "first," "second," etc. are used to describe various members, components, areas, layers, and/or portions. However, it is obvious that the members, components, areas, layers, and/or portions should not be defined by these terms. The terms do not mean a particular order, up and down, or superiority, and are used only for distinguishing one member, component, area, layer, or portion from another member, component, area, layer, or portion. Thus, a first member, component, area, layer, or portion which will be described may also refer to a second member, component, area, layer, or portion, without departing from the teaching of the present invention.

Spatially relative terms, such as "below", "beneath", "lower", "above", "upper" and the like, may be used herein for ease of description to describe one element or feature's relationship to another element(s) or feature(s) as illustrated in the figures. These spatially relative terms are intended for easy comprehension of the prevent invention according to various process states or usage states of the prevent invention, and thus, the present invention is not limited thereto. For example, an element or feature shown in the drawings is turned inside out, the element or feature described as "beneath" or "below" may change into "above" or "upper". Thus, the term "lower" may encompass the term "upper" or "below".

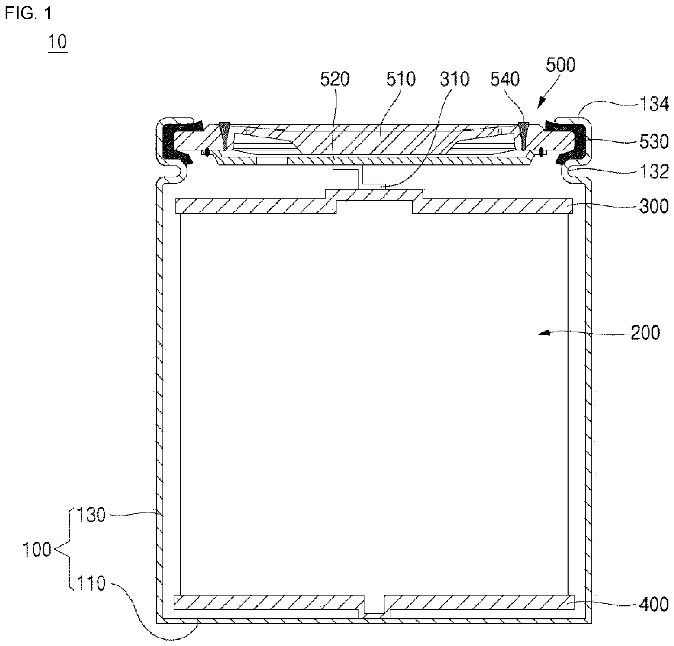

Hereinafter, a cylindrical secondary battery according to an embodiment will be described in detail with reference to the accompanying drawings (for convenience, an upper side is defined as an upper portion, and a lower side is defined as a lower portion based on FIG. 1).

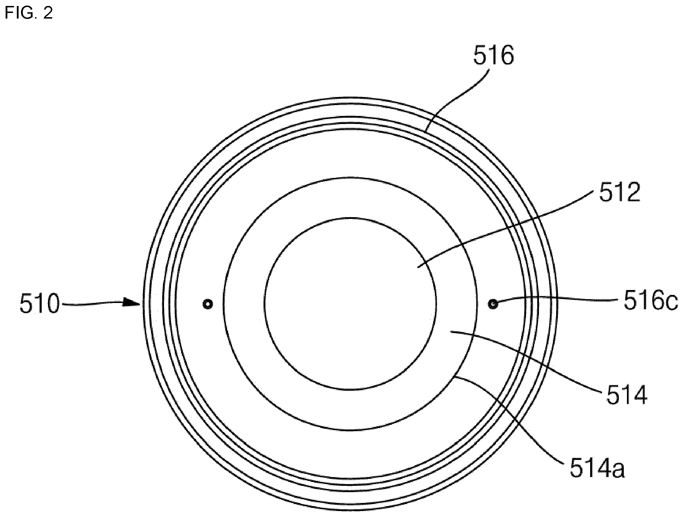

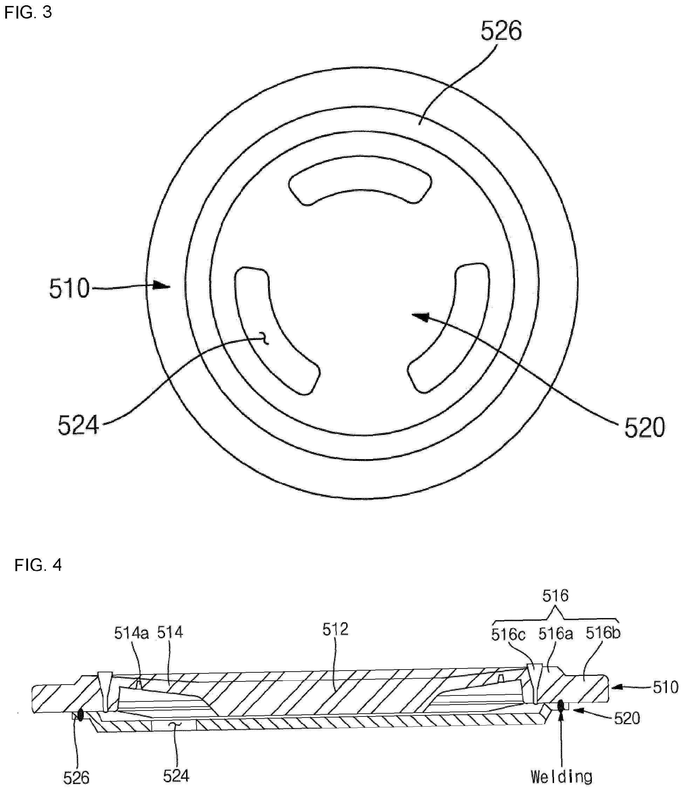

FIG. 1 is a cross-sectional view illustrating a cylindrical secondary battery according an embodiment. FIG. 2 is a plan view illustrating a cap assembly of FIG. 1. FIG. 3 is a plan view illustrating a rear surface of the cap assembly of FIG. 1. FIG. 4 is a cross-sectional view illustrating the cap assembly of FIG. 1.

As illustrated in FIG. 1, a cylindrical secondary battery 10 according to an embodiment may include a cylindrical can 100, an electrode assembly 200 inserted into the can 100, first and second electrode collector plates 300 and 400 electrically connected to the electrode assembly 200, and a cap assembly 500 coupled to one end of the can 100.

The can 100 may include a circular bottom part 110 and a side part 130 extending upward from the bottom part 110. The side part 130 has a cylindrical shape, and an upper end of the side part 130 is opened to define an opening. The bottom part 110 and the side part 130 may be integrated with each other or may be separately provided to be coupled to each other. In a process of manufacturing the secondary battery 10, the electrode assembly 200 and an electrolyte may be accommodated into the can 100 through the opening, and the cap assembly 500 may be coupled to the opening to seal the can 100. The can 100 may be made of steel, a steel alloy, nickel-plated steel, a nickel-plated steel alloy, aluminium, an aluminium alloy, or an equivalent thereof, but is not limited thereto. A beading part 132 may be concavely recessed inward adjacent to an upper end of the side part 130, and a crimping part 134 in which an end of the side part 130 is bent may be disposed on an upper portion of the beading part 132. The beading part 132 supports a lower portion of the cap assembly 500, and the crimping part 134 supports an upper portion of the cap assembly 500.

The electrode assembly 200 may include a first electrode plate, a second electrode plate, and a separator. The first electrode plate may be a positive electrode plate on which a positive electrode active material layer (e.g., transition metal oxide (LiCoO₂, LiNiO₂, LiMn₂O₄, etc.)) is disposed on each of both surfaces thereof. A first electrode non-coating portion to which the positive electrode active material layer is not applied may be disposed on a portion of the first electrode plate. For example, the first electrode non-coating portion may be disposed to face the opening of the can 100. In addition, the second electrode plate may be a negative electrode plate on which a negative electrode active material layer (e.g., graphite, carbon, etc.) is disposed on each of both surfaces thereof. A second electrode non-coating portion to which the negative electrode active material layer is not applied may be disposed on a portion of the second electrode plate. For example, the second electrode non-coating portion may be disposed to face the bottom part 110 of the can 100. The separator may be interposed between the first electrode plate and the second electrode plate to prevent short circuit from occurring and allow lithium ions to move only. For example, the first electrode plate may be aluminium (Al) foil, the second electrode plate may be copper (Cu) or nickel (Ni) foil, and the separator may be made of polyethylene (PE) or polypropylene (PP), but the embodiment is not limited to the above materials. The first electrode plate, the second electrode plate, and the separator may be wound in a substantially cylindrical shape and accommodated in the can 100. Here, the first electrode non-coating portion may be electrically connected to the first electrode collector plate, and the second electrode non-coating portion may be electrically connected to the second electrode collector plate 400.

The first electrode collector plate 300 may be welded to the first electrode non-coating portion of the positive electrode plate and may be electrically connected to the cap assembly 500 by a first electrode lead 310. Thus, the first electrode plate and the cap assembly 500 may be electrically connected to each other. The first electrode collector plate 300 may have an approximately circular plate shape. Alternatively, although not shown in the drawings, a base material tab may be disposed on the first electrode plate, and the first electrode collector plate 300 may be directly welded to the base material tab of the first electrode plate.

The second electrode collector plate 400 may be welded to the second electrode non-coating portion of the negative electrode plate and may be welded to the bottom part 110 of the can 100. Accordingly, the second electrode plate and the can 100 may be electrically connected to each other. The second electrode collector plate 400 may have an approximately circular plate shape. Alternatively, although not shown in the drawings, a substrate tab may be disposed on the second electrode plate, and the second electrode collector plate 400 may be welded to the bottom part 110 of the can 100.

As illustrated in FIGS. 2 to 4, the cap assembly 500 may include a vent plate 510, a cap down plate 520, and a gasket 530.

As illustrated in FIGS. 2 and 4, the vent plate 510 may have an approximately circular plate and include a first support 512 that is in contact with the cap down plate 520, a vent part 514 which is connected to the first support 512 and in which a notch 514a is provided, and a second support 516 connected to the vent part 514 and coupled to the side part 130 of the can 100.

The first support 512 may be a portion having a predetermined thickness, and a bottom surface of the first support 512 may be in contact with a top surface of the cap down plate 520. The first support 512 may have a thickness that is gradually reduced toward the outside. The vent part 514 may be integrally provided outside the first support 512.

The vent part 514 is disposed between the first support 512 and the second support 516 and has a relatively thin thickness compared to each of the first support 512 and the second support 516. The notch 514a is provided in a circular shape on the vent part 514, and when the gas is generated, if a gas pressure exceeds a predetermined level, the notch 514a is broken to serve as a gas discharge passage. The notch 514a may be provided at a side closer to the second support 516.

The second support 516 may be an edge portion of the vent plate 510, be connected to the outside of the vent part 514, and be integrated with the vent part 514. The second support 516 may include a first region 516a having a thickness similar to or greater than that of the first support 512 and a second region 516b having a thickness that relatively less than that of the first region 516a. A degassing hole 516c is defined to pass through the first region 516a. To secure rigidity for defining the degassing hole 516c, the thickness of the first region 516a may be greater than that of the second region 516b or the first support 512. A height of a top surface of the first region 516a may be greater than that of an edge of the vent part 514. On the other hand, a height of the top surface of the second region 516b may be less than that of the top surface of the first region 516a. The gasket 530 is coupled to the outside of the second region 516b, and the vent plate 510 is fixed by the crimping part 134 of the can 100 with the gasket 530 therebetween. Also, a portion of the cap down plate 520 is in close contact with a bottom surface of the first region 516a.

The degassing hole 516c is a hole penetrated from the top surface to the bottom surface of the first region 516a. The degassing hole 516c may be defined to be adjacent to the notch 514a in the first region 516a. For example, the degassing hole 516c may have a shape of which a diameter gradually decreases from an upper portion to a lower portion. A portion of the lower portion of the degassing hole 516c may have a shape of which the reduced diameter is maintained. The degassing hole 516c communicates with the inside of the can 100 through the cap down plate 520. When a gas is generated inside the secondary battery 10, the gas may be discharged between the vent plate 510 and the cap down plate 520 through a slot 524 defined in the cap down plate 520 and then be discharged to the outside through the degassing hole 516c. A bottom surface of the first support 512 may protrude downward from a bottom surface of the second support 516.

As illustrated FIGS. 3 and 4, the cap down plate 520 is disposed below the vent plate 510 and is electrically connected to the vent plate 510 and the first electrode collector plate 300. Although the cap down plate 520 is illustrated in FIG. 1 as being electrically connected to the first electrode collector plate 300 by the first electrode lead 310, the cap down plate 520 may be directly connected to the first electrode collector plate 300 through welding. The cap down plate 520 may have an approximately circular shape and may have a diameter less than that of the vent plate 510. A top surface of an edge of the cap down plate 520 is in close contact with the bottom surface of the second support 516 of the vent plate 510. This portion is defined as a third support 526. A top surface of each of other portions with respect to the third support 526 may have a height less than that of a top surface than the third support 526. That is, the top surface of the cap down plate 520 excluding the third support 526 may be concave toward the first electrode collector plate 300. A plurality of slots 524 serving as passages when a gas is generated may be defined to pass through a plate surface of the cap down plate 520. The slots 524 may be defined between a central portion of the cap down plate 520 and the third support 526.

The top surface of the cap down plate 520 is in close contact with the bottom surface of the first support 512, and the top surface of the third support 526 is in close contact with the bottom surface of the second support 516. The portion at which the second support and the third support 526 are in close contact with each other may be welded to provide a welded part. Since the second support 516 and the third support 526 are welded to each other, even though the notch 514a is ruptured when the gas is generated inside the secondary battery 10 to remove a portion of the first support 512, the coupling between the vent plate 510 and the cap down plate 520 may be maintained, and thus, the electrical connection between the electrode assembly 200 and the cap assembly 500 may be maintained.

Referring to FIG. 1, the gasket 530 has an approximately ring shape and may have a predetermined width. The gasket 530 may be provided to surround a portion or the whole of the second region 516b of the second support 516. The cap assembly 500 is insulated from the can 100 by the gasket 530 and is electrically connected to the first electrode collector plate 300. Therefore, when the first electrode collector plate 300 is a positive electrode collector plate, the cap assembly 500 may serve as a positive electrode.

Hereinafter, a method for manufacturing a secondary battery having the above-described structure will be briefly described.

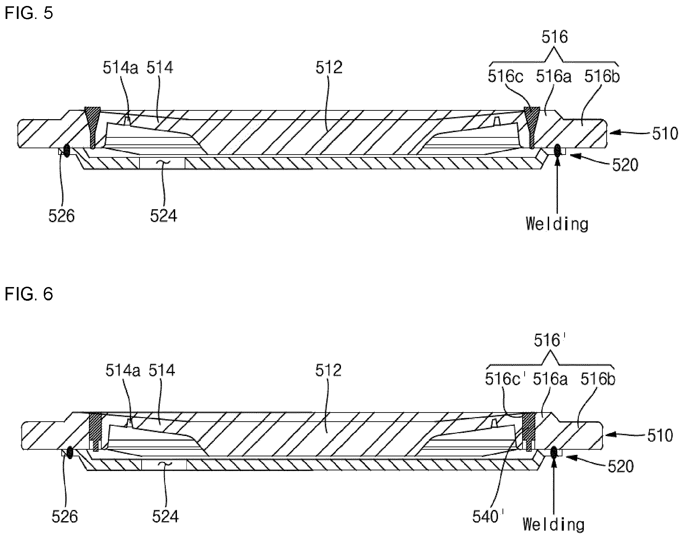

FIG. 5 is a cross-sectional view illustrating a sealing member of the cap assembly of FIG. 4.

After welding each of a first electrode collector plate 300 and a second electrode collector plate 400 to an electrode assembly 200, the electrode assembly 200 may be inserted into a can 100 so that the first electrode collector plate 300 faces upward, and then, an electrolyte is injected. After welding a vent plate 510 and a cap down plate 520 and coupling a gasket 530 to form a cap assembly 500, the cap assembly 500 is seated on a beading part 132 of a side part 130. Thereafter, a crimping part 134 is formed to assemble the cap assembly 500 to the can 100.

In this state, a resin pin (e.g., PP, PE, etc.) or a rubber pin is temporarily press-fitted into a degassing hole 516c to seal the secondary battery 10. That is, during the assembly process of the secondary battery 10, the degassing hole 516c is temporarily sealed by the resin pin or the rubber pin.

When a gas is generated inside the secondary battery 10 by charging and discharging before the secondary battery is released, the resin may be removed to discharge the internal gas through the degassing hole 516c. When the gas is completely discharged, as illustrated in FIG. 5, the sealing member may be press-fitted into the degassing hole 516c to close the degassing hole 516c. For example, the sealing member 540 may include a press-fitting ball or resin. For performing the press-fitting process, the sealing member 540 may have a size greater than that of the degassing hole 516c.

Other types may be applied instead of the above-described sealing member.

FIG. 6 is a cross-sectional view illustrating a sealing member according to another embodiment.

As illustrated in FIG. 6, a sealing member 540' according to another embodiment may be coupled to a degassing hole 516c' in the form of insertion rather than press fitting. That is, the sealing member 540' is manufactured to have a shape and size corresponding to those of the degassing hole 516c', thereby sealing the degassing hole 516c'. In this case, the sealing member 540' and the degassing hole 516c' may be provided in a male and female structure so that the sealing member 540' is separated from the degassing hole 516c', or a gas does not leak. Various structures may be applied to the male and female structure, such as a screw thread and screw groove structure, a concave-convex structure, and a tapered hook and hook groove structure.

According to the embodiment, since the degassing function is applied to remove the gas generated before the product shipment, the deformation of the can and the cap assembly may be reduced. In addition, the swelling of the electrode assembly due to the generation of the internal gas may be prevented from occurring to reduce the performance deterioration of the secondary battery.

The above-mentioned embodiment is merely an embodiment, and thus, the present invention is not limited to the foregoing embodiment, and also it will be understood by those of ordinary skill in the art that various changes in form and details may be made therein without departing from the scope of the present invention as defined by the following claims.

## Claims

1. A cylindrical secondary battery comprising:
a cylindrical can;
an electrode assembly in which a first electrode plate, a second electrode plate, and a separator are wound and which is accommodated in the can; and
a cap assembly which is insulated from the can and electrically connected to the electrode assembly and through which a degassing hole passes to communicate with the inside of the can.

2. The cylindrical secondary battery of claim 1, wherein the cap assembly comprises:
a vent plate coupled to one side of the can and spaced apart from the degassing hole to provide a notch;
a cap down plate which is disposed between the vent plate and the electrode assembly so as to be electrically connected to the electrode assembly and through which a plurality of slots pass; and
a gasket disposed between the vent plate and the can to insulate the vent plate and the can from each other.

3. The cylindrical secondary battery of claim 2, wherein the vent plate comprises:
a first support that is in contact with the cap down plate;
a vent part which is connected to the outside of the first support so as to be integrated with the first support and in which the notch is provided; and
a second support connected to the outside of the vent part so as to be integrated with the vent part and coupled to the can with the gasket therebetween.

4. The cylindrical secondary battery of claim 3, wherein the second support comprises:
a first region disposed toward the vent part and having a thickness greater than that of the vent part; and
a second region having a thickness relatively less than that of the first region.

5. The cylindrical secondary battery of claim 4, wherein the degassing hole is defined in the first region.

6. The cylindrical secondary battery of claim 5, wherein the cap down plate has a diameter less than that of the vent plate, and a top surface of an edge of the cap down plate is in close contact with and welded to a portion of a bottom surface of an edge of the vent plate.

7. The cylindrical secondary battery of claim 6, wherein the cap assembly further comprises a resin pin or rubber pin, which is press-fitted into the degassing hole to close the degassing hole after being assembled with the can.

8. The cylindrical secondary battery of claim 7, wherein the cap assembly further comprises a sealing member that closes the degassing hole after removing the resin pin or rubber pin when a gas is generated inside the can.

9. The cylindrical secondary battery of claim 8, wherein the sealing member comprises a press-fitting ball or resin or is coupled to the degassing hole in a male and female structure.

10. A method for manufacturing a cylindrical secondary battery, the method comprising:
accommodating an electrode assembly in a can so as to be electrically connected to the can;
electrically connecting a cap assembly to the electrode assembly;
assembling the cap assembly with the can;
inserting a resin pin or rubber pin into a hole passing through the cap assembly to close the hole; and
coupling a sealing member to the hole passing through the cap assembly to close the hole after discharging a gas by removing the resin pin or rubber pin when the gas is generated.
